# FASCICULE DE BREVET EUROPEEN

(11) **EP 1 144 318 B1**
(45) Date de publication et mention de la délivrance du brevet: **16.11.2005**
(21) Numéro de dépôt: 99961167.6
(22) Date de dépôt: 23.12.1999
(51) Int. Cl.: C02F 3/30, C02F 3/06, C02F 3/00

(54) **PROCEDE DE TRAITEMENT D'UN EFFLUENT METTANT EN OEUVRE UNE NITRIFICATION/DENITRIFICATION SIMULTANEES DANS UN BIOFILTRE**
VERFAHREN ZUR BEHANDLUNG VON ABWASSER IN EINEM BIOFILTER MITTELS GLEICHZEITIGER NITRIFIKATION/DENITRIFIKATION
METHOD FOR TREATING AN EFFLUENT USING SIMULTANEOUS NITRIFICATION/DENITRIFICATION IN A TRICKLING FILTER

(30) Priorité: 23.12.1998 FR 9816508
(43) Date de publication de la demande: 17.10.2001
(73) Titulaire: OTV SA, 94417 Saint-Maurice Cedex (FR)
(72) Inventeur: PAYRAUDEAU, Michèle, F-95600 Eaubonne (FR); LE TALLEC, Xavier, F-33610 Canestan-Cestas (FR)
(74) Mandataire: Vidon, Patrice
(86) Numéro de dépôt international: PCT/FR1999/003280
(87) Numéro de publication internationale: WO 2000/039034

(56) Documents cités:
- EP-A- 0 550 367
- EP-A- 0 683 139
- WO-A-98/32703
- FR-A- 2 547 574
- GB-A- 2 099 807
- PATENT ABSTRACTS OF JAPAN vol. 018, no. 233 (C-1195), 28 avril 1994 (1994-04-28) & JP 06 023390 A (EBARA INFILCO CO LTD;OTHERS: 01), 1 février 1994 (1994-02-01)

## Description

L'invention concerne le domaine du traitement des effluents et, principalement, le domaine du traitement des eaux usées, industrielles ou domestiques.

Plus précisément, la présente invention concerne un procédé de traitement de la pollution azotée contenue dans de tels effluents destiné à être mis en oeuvre dans une filtre biologique (également appelé "biofiltre").

Les filtres biologiques sont utilisés dans le traitement des eaux usées afin d'éliminer, ou à tout le moins d'abattre fortement, entre autres la pollution carbonée et la pollution azotée contenues dans celles-ci. Ils mettent en oeuvre un support de la biomasse constitué de particules pouvant être plus denses ou moins denses que l'eau qui permet également de filtrer physiquement l'effluent

L'élimination de la pollution azotée est classiquement réalisée par deux biomasses distinctes :
- la première, dite autotrotrophe, transforme la pollution ammoniacale en nitrates. Cette opération, appelée nitrification, nécessite la présence d'oxygène dans l'eau à traiter. Cette opération a donc lieu dans une zone aérobie du filtre biologique ;
- la seconde, dite hétérotrophe, transforme les nitrates en azote gazeux. Cette opération, appelée dénitrification, nécessite une présence de pollution carbonée utilisée comme substrat par la biomasse hétérotrophe, et l'absence d'oxygène moléculaire. En effet, l'oxygène apporté par les nitrates dans la zone anoxie du réacteur est utilisé par les bactéries pour éliminer la pollution carbonée.

Dans le traitement des eaux usées, la nitrification et la dénitrification peuvent se réaliser suivant deux modes principaux. Le premier consiste en une pré-dénitrification utilisant la pollution carbonée présente dans l'effluent à traiter, suivie d'une nitrification. La deuxième consiste en une pré-nitrification suivie d'une dénitrification nécessitant alors une source de carbone externe.

Il existe deux grandes familles de filtres biologiques, les biofiltres ascendants dans lesquels l'eau à traiter transite selon un courant ascendant, et les biofiltres descendants dans lesquels l'eau à traiter transite selon un courant descendant. Ces deux types de biofiltres peuvent se combiner de différentes manières. Dans le cas de l'utilisation d'un biofiltre ascendant, la nitrification et la dénitrification peuvent être effectuées sur deux biofiltres en série, l'un fonctionnant en anoxie et l'autre en aérobie, ou dans un seul biofiltre. Dans le cas d'un seul biofiltre, on prévoit des moyens d'injection d'air dans une zone intermédiaire du filtre permettant de ménager dans celui-ci une zone anoxique inférieure et une zone aérobie supérieure. Une recirculation d'une partie de l'eau traitée est renvoyée dans la zone anoxique afin d'alimenter en substrat les bactéries hétérotrophes qui s'y trouvent. Par contre lorsque l'on choisit la technologie des biofiltres à courant descendant, la dénitrification et la nitrification nécessitent obligatoirement deux filtres montés en série, l'un fonctionnant en aérobiose et l'autre fonctionnant en anoxie.

Un inconvénient de tels procédés de l'état de la technique est :
- soit d'impliquer fréquemment l'utilisation de deux biofiltres (un filtre aéré nitrifiant et un filtre non aéré dénitrifiant) pour le traitement de la pollution azotée et donc d'entraîner des coûts de construction et d'exploitation élevés ;
- soit de nécéssiter l'installation d'une rampe d'aération au sein du matériau ce qui amène des contraintes de constructions.

L'objectif de la présente invention est de proposer un procédé permettant de traiter la pollution azotée d'un effluent aqueux n'impliquant pas de tels inconvénients.

En particulier, un objectif de l'invention est de proposer un tel procédé permettant un gain économique lors de la construction des installations pour sa mise en oeuvre, par rapport aux installations de l'état de la technique.

Un autre objectif de la présente invention est de décrire un tel procédé qui permette d'économiser de l'énergie lors de sa mise en oeuvre.

Encore un autre objectif de l'invention est de proposer un tel procédé qui permette d'aboutir à une meilleure qualité de l'effluent traité.

Ces objectifs sont atteints grâce à l'invention qui concerne un procédé de traitement biologique par nitrification/dénitrification d'un effluent selon la revendication 1.

Le procédé selon l'invention permet donc d'effectuer dans un seul et même filtre biologique (biofiltre) un traitement complet de la pollution azotée d'un effluent par nitrification /dénitrification, mais sans délimiter physiquement au sein du lit de matériau granulaire constituant le biofiltre une zone fonctionnant en anoxie et une zone fonctionnant en aérobiose.

Un tel procédé permet d'obtenir un meilleur rendement d'apport d'oxygène par rapport aux techniques mettant en oeuvre un biofiltre pourvu d'une rampe d'apport d'oxygène intermédiaire et ainsi de diminuer notablement les coûts de fonctionnement

Le procédé selon l'invention permet également d'obtenir un rejet de meilleure qualité que dans les procédés de l'état de l'art.

On comprendra que la valeur de consigne utilisée dans le cas du présent procédé pourra varier en fonction de la nature de l'effluent traité. Selon une variante préférentielle intéressante du procédé, cette valeur de consigne sera déterminée en fonction de la charge azotée de l'effluent ou par un niveau de pollution mesuré en sortie dudit biofiltre.

Selon une autre variante du procédé, celui-ci comprend une étape complémentaire consistant à recirculer dans le réacteur biologique au moins une partie de l'effluent traité. On notera que le procédé selon l'invention permet de diminuer les taux de recirculation.

On pourra envisager de mettre en oeuvre le procédé selon l'invention dans un réacteur biologique à cultures fixées dans lequel l'effluent transite selon un flux ascendant.

Le paramètre représentatif de la consommation en oxygène des cultures fixées sur le biofiltre mesuré dans le cadre du présent procédé pourra être constitué notamment par la concentration en oxygène dissous de l'effluent, par le potentiel d'oxydo-réduction de celui-ci ou encore par sa concentration en amonium, sa concentration en nitrates ou sa concentration en NADH (nicotinamide adénosine dinucléotide hydrogénase). La mesure de ce paramètre est effectuée sur l'effluent traité sortant du réacteur biologique mais aussi sur l'effluent transitant à l'intérieur de celui-ci. On comprendra que cette étape de mesure pourra donc être mise en oeuvre à l'intérieur du filtre biologique ou à l'extérieur de celui-ci.

Selon une variante préférentielle, le paramètre représentatif de la consommation d'oxygène par les cultures fixées est constitué par la concentration en oxygène dissos de l'effluent traité (mesuré soit à la sortie du réacteur soit à l'intérieur de celui-ci par exemple dans la lame d'eau précédent la sortie de l'effluent du réacteur) et le procédé est mis en oeuvre de façon à maintenir une concentration en oxygène dissous de cet effluent traité comprise entre 3 et 8 mg par litre et préférentiellement entre 4 et 7 mg par litre. Cette valeur pourra être définie et fixée par une mesure en continu sur l'eau traitée (par exemple NH₄) ou en fonction de la température de l'eau

Lorsque le niveau de rejet requis le nécessitera, le procédé comprendra une étape supplémentaire consistant à ajouter audit effluent au moins une source de carbone. Un tel cas se produira lorsque l'on souhaitera obtenir un effluent présentant une teneur en azote globale faible et lorsqu'il n'y aura pas assez de carbone organique biodégradable dans l'effluent à traiter.

Lorsque l'effluent épuré devra présenter une teneur particulièrement faible en nitrates, le procédé selon l'invention pourra aussi comprendre une étape supplémentaire de post-dénitrification.

La présente invention concerne également toute installation spécialement conçue pour la mise en oeuvre du procédé décrit ci-dessus comprenant au moins un réacteur biologique à cultures fixées selon la revendication.

Comme indiqué ci-dessus, le procédé pourra être mis en oeuvre sur tout type de réacteur biologique à cultures fixées selon la revendication 9. Toutefois, préférentiellement l'installation présente un réacteur biologique du type ascendant et comprend un lit fluidisé monocouche ou multicouches d'au moins un matériau granulaire ainsi que des moyens de recirculation de l'effluent traité.

Egalement préférentiellement, les moyens de mesure en question incluent au moins un capteur de la concentration en oxygène dissous installé dans la tranche d'eau présente au-dessus dudit lit de matériau granulaire à une distance préférentiellement comprise entre 5 cm et 40 cm au-dessus de la surface supérieure de celui-ci.

L'installation pourra également comprendre au moins un ouvrage de séparation des effluents traités et du matériau granulaire et des moyens de mesure qui seront avantageusement dans ce cas installés en sortie dudit ouvrage.

L'invention sera plus facilement comprise grâce à la description qui va suivre d'un mode de réalisation non limitatif de celle-ci en référence aux dessins dans lesquels :
- la figure 1 représente une installation pour la mise en oeuvre du procédé ;
- la figure 2 représente l'évolution de la concentration en azote amoniacal et en nitrates d'un effluent après traitement par le procédé selon l'invention et d'un effluent après traitement selon le procédé classique ;
- la figure 3 représente les vitesses d'air et les concentrations en oxygène dissous à la sortie du biofiltre dans le cas du procédé selon l'invention et dans le cas d'un procédé classique.

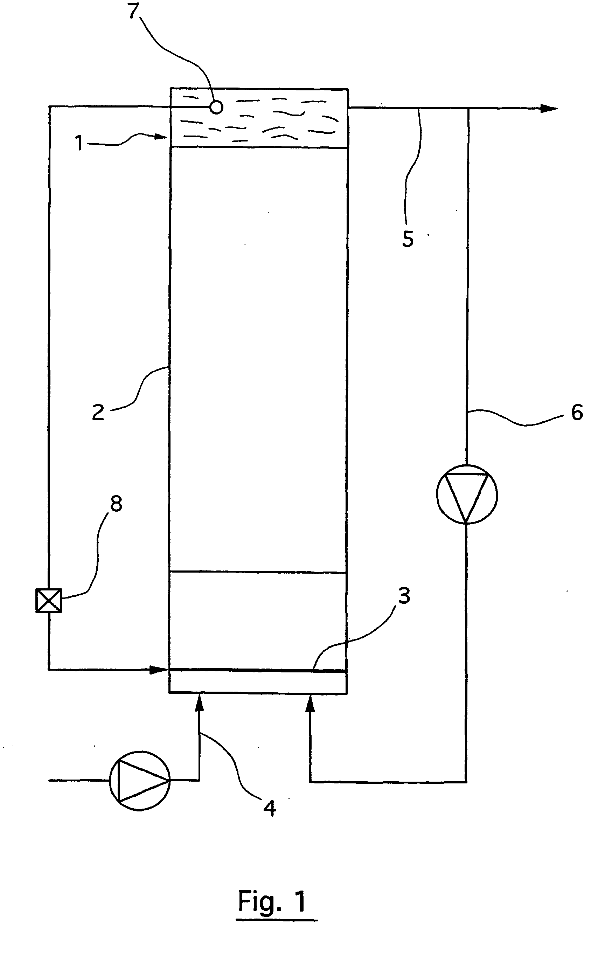

Le procédé a été mis en oeuvre sur une installation montrée à la figure 1 constituée par un biofiltre 1 à courant ascendant, incluant un lit filtrant 2 constitué d'au moins d'un matériau granulaire plus léger que l'eau (billes de polystyrène) une rampe d'aération 3 du lit filtrant 2 prévue à la base du biofiltre, des moyens d'alimentation 4 en eau à traiter prévus dans la partie inférieure du filtre, des moyens d'évacuation 5 de l'eau traitée prévus dans la partie supérieure du biofiltre, des moyens de recirculation 6 d'une partie de l'eau traitée, des moyens de mesure 7 de la concentration en oxygène dissous de l'effluent et des moyens 8 de régulation du fonctionnement des moyens d'aération 3 en fonction des résultats des mesures effectuées par lesdits moyens de mesure 7.

Une installation selon l'état de la technique ne différant de celle montrée à la figure 1 que par la position de la rampe d'aération positionnée à l'intérieur du lit filtrant (de façon à aménager dans celui-ci une zone supérieure aérobie et une zone inférieure anoxique et par l'absence de moyens de mesure et de moyens de régulation a par ailleurs été utilisée à titre de témoin.

Les lits filtrants des deux installations présentent une hauteur de matériau filtrant de2,75 m.

La vitesse de filtration a été fixée à 3,0 m/h et la recirculation à un taux de 100 % du débit d'alimentation.

La même eau a été traitée dans les deux installations.

Le tableau 1 présente les résultats obtenus grâce au procédé selon l'invention, obtenus sur une journée de traitement (moyenne journalière), dans le cas du procédé selon l'invention et dans le cas du procédé classique.

| | N-NH4 moy eau décantée (mg/l) | N-NH4 moy eau traitée (mg/l) | N-NO3 moy eau traitée (mg/l) | Vitesse air Nm³/h/m² | Rendement en % sur N-NH4 + N-NO3 |
|---|---|---|---|---|---|
| N-DN Filtre classique | 68 | 9,0 | 21,3 | 10,1 | 54 % |
| N-DN simultanée (invention) | 68 | 1,7 | 21,4 | 5,3 | 65 % |

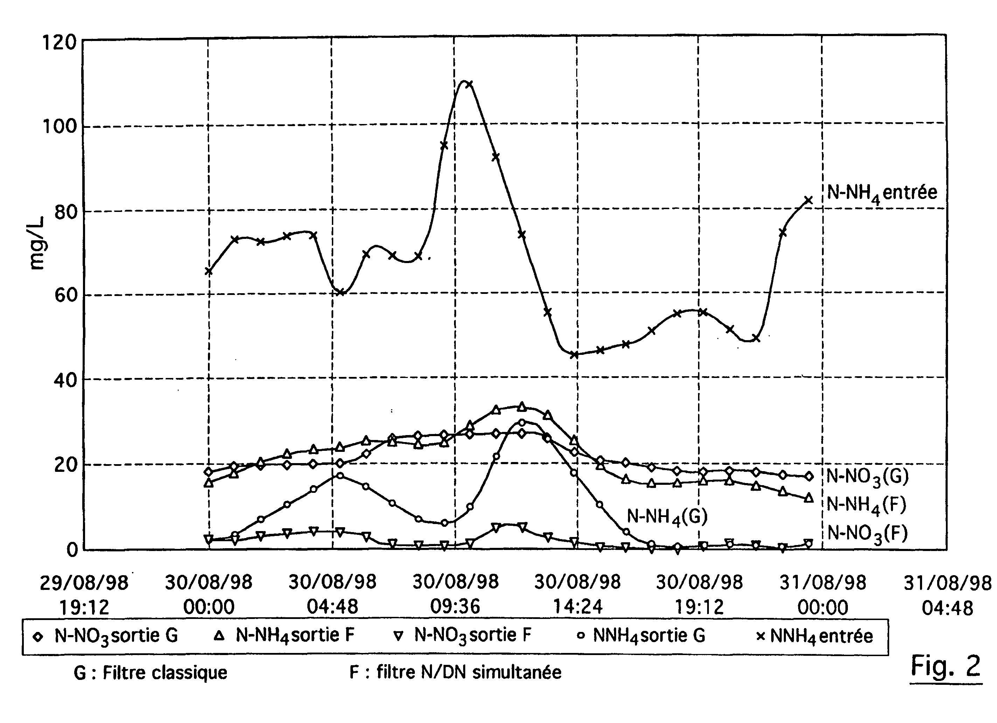

Ce tableau ne donne que des moyennes, les valeurs obtenues sur 24 heures correspondant à ces moyennes étant indiquées sur la figure 2.

Les courbes représentées sur cette figure 2 montrent clairement que l'effluent traité selon le procédé selon l'invention présente une teneur plus faible en azote ammoniacal que celui traité par le procédé classique.

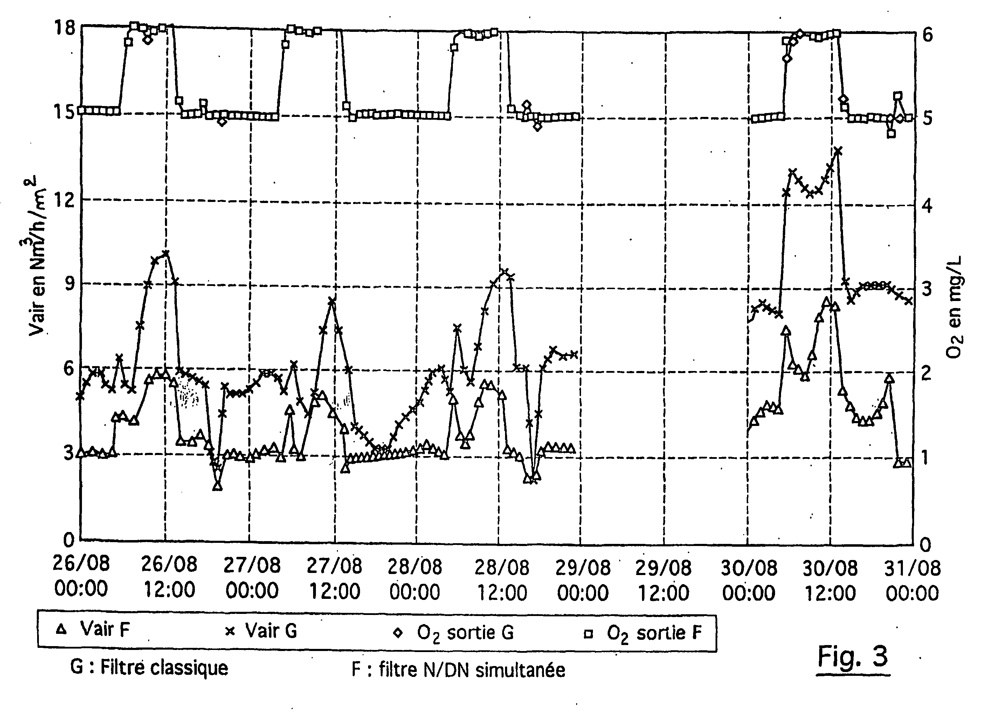

En référence à la figure 3, qui compare les vitesses d'air utilisées dans le filtre selon le procédé selon l'invention et le filtre selon le procédé classique prouve un intérêt du procédé selon l'invention qui indique un meilleur coefficient de transfert de l'oxygène et donc une moindre consommation d'air.

En conclusion, par rapport aux procédés d'élimination de l'azote avec un ou deux réacteurs à cultures fixées, le procédé selon l'invention présente les avantages :
- de ne pas nécessiter l'installation d'une rampe intermédiaire au sein du matériau pour délimiter au sein d'un même réacteur deux zones distinctes à savoir une zone aérée et une zone non aérée ;
- ne pas nécessiter d'utiliser deux réacteurs séparés, l'un aéré pour la nitrification, l'autre fonctionnant en anoxie pour la dénitrification ;
- d'impliquer un gain économique au niveau du fonctionnement de l'installation, voir un gain économique possible au niveau de la taille de celle-ci ;
- de permettre la réalisation d'un gain énergétique au niveau de l'exploitation puisqu'un meilleur rendement d'aération peut être obtenu du fait que l'air injecté traverse une plus grande hauteur de matériau avec un débit d'air à injecter inférieur à ceux préconisés dans les procédés classiques mettant en oeuvre un ou deux réacteurs :
- de permettre d'obtenir une eau traitée de meilleure qualité.

Les installations pour la mise en oeuvre d'un tel procédé peuvent de plus être supervisées avec un système simple.

Enfin, on notera, qu'un tel procédé peut permettre de réhabiliter à moindre frais une installation ancienne.

Le mode de réalisation de l'invention ici décrit n'a pas pour objet de réduire la portée de celle-ci.

## Revendications

1. Procédé de traitement biologique par nitrification/dénitrification d'un effluent consistant à faire transiter ledit effluent dans un biofiltre du type ascendant à cultures fixées sur un matériau granulaire pourvu à sa base de moyens d'apport d'oxygène,
**caractérisé en ce qu'**il consiste à aérer en continu essentiellement l'ensemble dudit lit de matériau granulaire, à mesurer sur l'effluent traité au moins un paramètre représentatif de la consommation en oxygène desdites cultures fixées, et à réguler le fonctionnement desdits moyens d'apport d'oxygène en fonction des résultats de ladite mesure dudit paramètre et d'une valeur de consigne de celui-ci, ledit procédé autorisant une nitrification/dénitrification essentiellement simultanées dudit effluent.

2. Procédé selon la revendication 1 **caractérisé en ce que** ladite valeur de consigne dudit paramètre est déterminée en fonction de la charge azotée dudit effluent ou par un niveau de pollution mesuré en sortie dudit biofiltre.

3. Procédé selon l'une quelconque des revendications 1 ou 2 **caractérisé en ce qu'**il comprend une étape complémentaire consistant à recirculer dans ledit réacteur au moins une partie de l'effluent traité.

4. Procédé selon la revendication 3 **caractérisé en ce que** ladite étape complémentaire consistant à recycler l'effluent traité est effectuée avec un taux de recirculativn compris entre 75 % et 400 %, préférentiellement entre 100 % et 200 %.

5. Procédé selon l'une quelconque des revendications 1 à 4 **caractérisé en ce que** ledit au moins un paramètre est choisi dans le groupe constitué par la concentration en oxygène dissous, le potentiel d'oxydo-réduction, la concentration en ammonium, la concentration en nitrates, la concentration en NADH de l'effluent traité.

6. Procédé selon la revendication 5 **caractérisé en ce que** ledit paramètre est la concentration en oxygène dissous de l'effluent traité, le procédé étant mis en oeuvre pour maintenir une telle concentration à une valeur comprise entre 3 et 8 mg/l, préférentiellement entre 4 et 7 mg/l.

7. Procédé selon l'une quelconque des revendications 1 à 6 **caractérisé en ce qu'**il comprend une étape supplémentaire consistant à ajouter audit effluent au moins une source de carbone.

8. Procédé selon l'une quelconque des revendications 1 à 7 **caractérisé en ce qu'**il comprend une étape supplémentaire de post-dénitrification.

9. Installation spécialement conçue pour la mise en oeuvre du procédé selon l'une quelconque de revendications 1 à 8 constituée d'un biofiltre du type ascendant à cultures fixées sur un matériau granulaire pourvu à sa base de moyens d'apport d'oxygène **caractérisée en ce qu'**elle comprend des moyens de mesure, sur l'effluent traité, d'au moins un paramètre représentatif de la consommation d'oxygène par lesdites cultures fixées, et des moyens de régulation desdits moyens d'apport d'oxygène en fonction de ladite mesure

10. Installation selon la revendication 9 **caractérisée en ce que** lesdits moyens de mesure incluent au moins un capteur de la concentration en oxygène dissous installé dans la tranche d'eau présente au-dessus dudit lit de matériau granulaire à une distance comprise entre 5 cm et 40 cm au-dessus de la surface supérieure de celui-ci.

## Patentansprüche

1. Verfahren zum biologischen Klären von Abwässern durch Nitrierung/Denitrierung, darin bestehend, dass das Abwasser durch einen Biofilter des aufsteigenden Typs mit auf einem körnigen Material fixierten Kulturen zirkuliert, wobei der Filter an der Basis über Mittel für die Sauerstoffzufuhr verfügt,
**dadurch gekennzeichnet, dass** es im Wesentlichen im kontinuierlichen Belüften des gesamten Bettes aus körnigem Material besteht, im Messen mindestens eines für den Sauerstoffverbrauch durch die erwähnten fixierten Kulturen repräsentativen Parameters am behandelten Abwasser und im Regeln der Funktion der Mittel für die Sauerstoffzufuhr als Funktion der Ergebnisse der erwähnten Messung des besagten Parameters und eines Einstellwertes desselben besteht, wobei das Verfahren eine im Wesentlichen die gleichzeitige Nitrierung/Denitrierung der Abwasser gestattet.

2. Verfahren nach Anspruch 1, **dadurch gekennzeichnet, dass** der Einstellwert des erwähnten Parameters als Funktion der Stickstoffbelastung des Abwassers oder durch einen am Ausgang des Biofilters gemessenen Verunreinigungspegel festgelegt wird.

3. Verfahren nach einem der Ansprüche 1 oder 2, **dadurch gekennzeichnet, dass** es einen zusätzlichen Schritt umfasst, bei dem mindestens ein Teil des behandelten Abwassers durch den Reaktor rezirkuliert wird.

4. Verfahren nach Anspruch 3, **dadurch gekennzeichnet, dass** bei dem zusätzlichen Rezirkulierungsschritt, die Rezirkulierungsrate des Abwassers 75 % bis 400 % und bevorzugt 100 % bis 200 % beträgt.

5. Verfahren nach einem der Ansprüche 1 bis 4, **dadurch gekennzeichnet, dass** der erwähnte mindestens ein Parameter aus der Gruppe gewählt wird, welche aus der Konzentration des gelösten Sauerstoffs, dem Oxydations-Reduktions-Potential, der Ammonkonzentration, der Nitratenkonzentration und der NADH-Konzentration des behandelten Abwassers besteht.

6. Verfahren nach Anspruch 5, **dadurch gekennzeichnet, dass** es sich beim erwähnten Parameter um die Konzentration des gelösten Sauerstoffs handelt, wobei dieses Verfahren angewandt wird, um die erwähnte Konzentration bei einem zwischen 3 und 8 mg/l liegenden Wert und bevorzugterweise zwischen 4 und 7 mg/l zu halten.

7. Verfahren nach einem der Ansprüche 1 bis 6, **dadurch gekennzeichnet, dass** es einen zusätzlichen Schritt umfasst, bei dem mindestens eine Kohlenstoffquelle dem Abwasser hinzugefügt wird.

8. Verfahren nach einem der Ansprüche 1 bis 7, **dadurch gekennzeichnet, dass** es einen zusätzlichen Schritt der nachträglichen Denitrierung umfasst.

9. Besonders zum Anwenden des Verfahrens nach einem der Ansprüche 1 bis 8 konzipierte Anlage, bestehend aus einem Biofilter des aufsteigenden Typs mit auf einem körnigen Material fixierten Kulturen, wobei der Filter an der Basis über Mittel für die Sauerstoffzufuhr verfügt,
**dadurch gekennzeichnet, dass** diese Anlage über Mittel zum Messen von mindestens einem für den Sauerstoffverbrauch durch die erwähnten fixierten Kulturen repräsentativen Parameters am behandelten Abwasser sowie über Mittel zum Regeln der Funktion der Mittel für die Sauerstoffzufuhr als Funktion der Ergebnisse der erwähnten Messung verfügt.

10. Anlage nach Anspruch 9, **dadurch gekennzeichnet, dass** die erwähnten Mittel zum Messen mindestens einen Fühler für die Konzentration des gelösten Sauerstoffs umfassen, wobei diese(r) Fühler in der oberhalb des körnigen Materialbetts vorhandenen Wasserschicht angebracht ist und der Abstand zur oberen Fläche dieses Materialbetts zwischen 5 cm und 40 cm betrifft.

## Claims

1. A biological nitrification/denitrification treatment process for an effluent consisting of causing said effluent to pass through an upflow type biofilter with cultures immobilised on a granular material provided at its base with oxygen supply means,
**characterised in that** it consists of continuously aerating essentially the entirety of said bed of granular material, measuring on the treated effluent at least one parameter which is representative of the oxygen consumption of said immobilised cultures, and regulating the operation of said oxygen supply means as a function of the results of said measurement of said parameter and a setpoint value of the latter, said process enabling essentially simultaneous nitrification/denitrification of said effluent.

2. A process according to claim 1, **characterised in that** said setpoint value of said parameter is determined as a function of the nitrogen load of said effluent or by a pollution level measured at the outlet of said biofilter.

3. A process according to either one of claim 1 or claim 2, **characterised in that** it comprises a complementary step consisting of recirculating at least a proportion of the treated effluent into said reactor.

4. A process according to claim 3, **characterised in that** said complementary step consisting of recycling the treated effluent is performed at a recirculation rate of between 75% and 400%, preferably between 100% and 200%.

5. A process according to any one of claims 1 to 4,
**characterised in that** said at least one parameter is selected from the group consisting of the treated effluent's dissolved oxygen concentration, oxidation-reduction potential, ammonium concentration, nitrate concentration or NADH concentration.

6. A process according to claim 5, **characterised in that** said parameter is the dissolved oxygen concentration of the treated effluent, the process being used to maintain such a concentration at a value of between 3 and 8 mg/l, preferably between 4 and 7 mg/l.

7. A process according to any one of claims 1 to 6,
**characterised in that** it comprises an additional step consisting of adding at least one source of carbon to said effluent.

8. A process according to any one of claims 1 to 7,
**characterised in that** it comprises an additional step of post-denitrification.

9. An installation specially designed for implementing the process according to any one of claims 1 to 8 consisting of an upflow type biofilter with cultures immobilised on a granular material provided at its base with oxygen supply means, **characterised in that** it comprises means for measuring, on the treated effluent, at least one parameter which is representative of the oxygen consumption by said immobilised cultures, and means for regulating said oxygen supply means as a function of said measurement.

10. An installation according to claim 9, **characterised in that** said measurement means includes at least one sensor for dissolved oxygen concentration installed in the layer of water present above said bed of granular material at a distance of between 5 cm and 40 cm above the upper surface of the latter.
